# EUROPÄISCHE PATENTSCHRIFT

(11) **EP 1 255 784 B1**
(45) Veröffentlichungstag und Bekanntmachung des Hinweises auf die Patenterteilung: **14.04.2010**
(21) Anmeldenummer: 01915205.7
(22) Anmeldetag: 08.02.2001
(51) Int. Cl.: C08F 210/02, C08F 297/08, C08F 10/02, B01D 3/00

(54) **VERFAHREN ZUR RADIKALISCHEN ETHYLEN-HOCHDRUCKPOLYMERISATION UNTER VERMEIDUNG UNERWÜNSCHTER POLYMERABLAGERUNGEN**
METHOD FOR CARRYING OUT RADICAL ETHYLENE HIGH-PRESSURE POLYMERIZATION WHILE PREVENTING UNDESIRED POLYMER DEPOSITS
PROCEDE DE POLYMERISATION PAR VOIE RADICALAIRE SOUS HAUTE PRESSION D'ETHYLENE DE MANIERE A EVITER LA FORMATION DE DEPOTS INDESIRABLES DE POLYMERE

(30) Priorität: 16.02.2000 DE 10006900
(43) Veröffentlichungstag der Anmeldung: 13.11.2002
(73) Patentinhaber: Basell Polyolefine GmbH, 50389 Wesseling (DE); BASF SE, 67056 Ludwigshafen (DE)
(72) Erfinder: MÄHLING, Frank-Olaf, 68167 Mannheim (DE); DECKERS, Andreas, 55234 Flomborn (DE); LITTMANN, Dieter, 35325 Mücke (DE); SUTORIS, Heinz, Friedrich, 67551 Worms (DE); EVERTZ, Kaspar, 67105 Schifferstadt (DE)
(86) Internationale Anmeldenummer: PCT/EP2001/001343
(87) Internationale Veröffentlichungsnummer: WO 2001/060875

(56) Entgegenhaltungen:
- EP-A- 0 717 054
- EP-A- 0 927 724
- DE-A- 19 818 216
- US-A- 5 059 662
- US-A- 5 739 242
- US-A- 5 872 252
- US-A- 5 914 379

## Beschreibung

Die vorliegende Erfindung betrifft ein Verfahren zur Polymerisation von ethylenisch ungesättigten Monomeren unter Zudosierung von Inhibitoren sowie die Verwendung der Inhibitoren.

Polymerisationsverfahren, bei denen Ethylenpolymerisate durch Homopolymerisation von Ethylen oder durch Copolymerisation von Ethylen und mit Ethylen copolymerisierbaren Verbindungen bei Drücken von 1500 bis 3500 bar und Temperaturen von 150 bis 350°C in kontinuierlich betriebenen Polymerisationsreaktoren in Gegenwart von radikalisch zerfallenden Polymerisationsinitiatoren hergestellt werden, sind bekannt. Eine Beschreibung des Verfahrens sowie ein entsprechendes Verfahrensschema finden sich in Ullmanns Encyclopädie der technischen Chemie, Verlag Chemie GmbH, Weinheim, Band 19 (1980), Seiten 169 - 178.

Dabei wird üblicherweise Monomer-Frischgas in einem 5- bis 6-stufigen Vorverdichter von ca. Normaldruck auf 200 bis 300 bar komprimiert, wobei das komprimierte Gas nach jeder Stufe zur Abführung der Kompressionswärme in einem Zwischenkühler gekühlt wird. In einem Nachverdichter wird das Gas auf den Enddruck von 1500 bis 3500 bar komprimiert. Im Reaktor, einem Rohr- oder Autoklavenreaktor, wird die Polymerisation durch Initiatoren gestartet. Beim Rohrreaktorverfahren wird als Initiator häufig Sauerstoff eingesetzt. Es werden ferner radikalisch zerfallende Initiatoren, wie Peroxide, eingesetzt, wobei Sauerstoff mit Peroxiden kombiniert werden kann. Das Monomergas, das bereits den Initiator enthält, wird dabei in einem Vorwärmer am Reaktoreingang auf die zum Polymerisationsstart notwendige Temperatur, beipielsweise auf 170 bis 190 °C hochgeheizt. Im Autoklavenreaktor wird die Polymerisation durch Einführung von Initiatorlösung in den vorgeheizten Reaktor gestartet. Der Monomerumsatz im Reaktor beträgt üblicherweise nicht mehr als 20 %. Nach Verlassen des Reaktors wird das Reaktionsgemisch durch ein Druckhalteventil auf 200 bis 300 bar in einen Hochdruckproduktabscheider und von dort aus durch ein Produktventil auf 1 bis 3 bar in einen Niederdruckproduktabscheider entspannt. Ein Teil des unumgesetzten Monomergases wird vom Hochdruckproduktabscheider abgetrennt und zur Saugseite des Nachverdichters zurückgeführt. Der noch im Polymeren vorhandene Monomeranteil wird im Niederdruckproduktabscheider weitgehend ausgegast. Die mit Nebenprodukten der Polymerisation verunreinigten Monomergas-Teilströme werden im Hochdruck- wie im Niederdruckkreis über Kühler und Abscheider rückgeführt, wobei wachsartige und flüssige Substanzen abgetrennt und das rückgeführte Monomergas gleichzeitig auf eine für die Rekompression zulässige Temperatur abgekühlt wird.

Bei der Verdichtung des ethylenisch ungesättigten Monomeren treten schon vor der Initiierung der Polymerisation in den Vorverdichtern und Verdichtern häufig vorzeitige Polymerisationen auf, die zu Belagbildungen führen und ein häufiges Reinigen der Verdichter in kurzen Abständen erforderlich machen. Wegen der Belagbildung und der damit verbundenen Temperaturerhöhung im Bereich der Verdichter sinkt deren Förderleistung. Für eine gleichbleibend hohe Produktqualität sind jedoch möglichst konstante Betriebsbedingungen erforderlich. Im Bereich des Hochdruckproduktabscheiders führt die Bildung von Radikalen zur Propfung der gebildeten Polymere durch unerwünschte Kettenverzweigungs- und Vernetzungsreaktionen und damit zu einer Herabsetzung der Produktqualität.

Zur Vermeidung unerwünschter Polymerisationsreaktionen können dem Monomergasgemisch sogenannte Inhibitoren (Stabilisatoren) zugegeben werden.

In DE-A 196 22 441 US5872252 ist ein Verfahren zum Verdichten von ethylenisch ungesättigten Monomeren auf einen Druck zwischen 200 und 5000 bar in Abwesenheit eines Polymerisationsinitiators beschrieben, bei dem die Verdichtung in Gegenwart eines sterisch gehinderten Aminderivats, beispielsweise Derivaten des Tetramethylpiperidinoxids, als Inhibitor vorgenommen wird. Die Inhibitoren werden als Lösungen, beispielsweise in Isododecan, zudosiert. Der Inhibitor wird beispielsweise nach dem Vorverdichter bei 220 bar zudosiert.

In der DE-A-19818216 ist die Verwendung von Carbonsäuren zur Steuerung des Zerfalls von Peroxidinitiatoren und die Verwendung von Wasserstoff als Molekulargewichtsregler in der Hochdruckpolymerisation von Ethylen offenbart.

Aufgabe der Erfindung ist, einen einfach zu dosierenden, gasförmigen Inhibitor bereitzustellen.

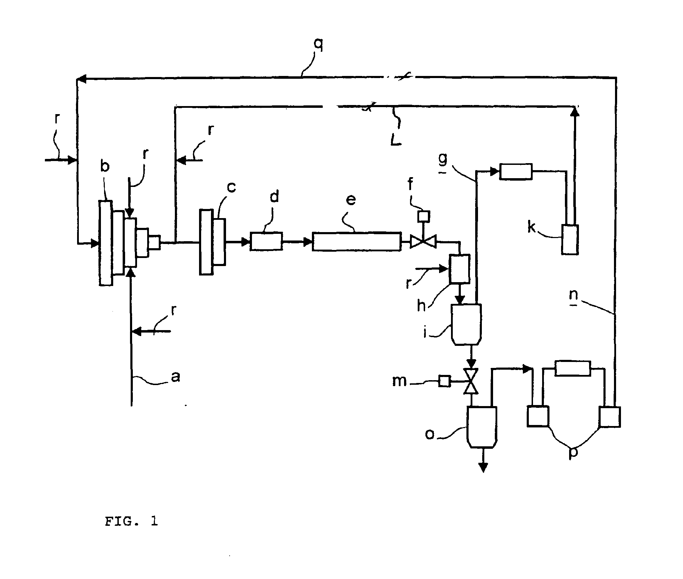

Fig.1 zeigt eine Polymerisationsvorrichtung umfassend eine Frischgaszuführung (a), einen Vorverdichter (b), einen Nachverdichter (c), einen Reaktor (e), ein Druckhalteventil (f), einen Hochdruckkreis (g) mit einem Hochdruckproduktabscheider (i) und einer Hochdruckkreisgasrückführung (L), ein Produktventil (m) und einen Niederdruckkreis (n) mit einem Niederdruckproduktabscheider (o) und einer Niederdruckkreisgasrückführung (q), dadurch gekennzeichnet, daß in den Hochdruckkreis (g), in den Niederdruckkreis (n) und/oder den Vorverdichter (b) Stickstoffmonoxid oder Sauerstoff als Inhibitor zudosiert wird. Fig. 1 zeigt ferner mögliche Stellen der Inhibitor-Zudosierung, die mit (r) bezeichnet sind.

Bei dem Reaktor (e) kann es sich um einen beliebigen üblichen Hochdruck-Polymerisationsreaktor handeln, beispielsweise einen Rohrreaktor oder einen Autoklavenreaktor. Vorzugsweise handelt es sich um einen Rohrreaktor. Es kommen alle möglichen Typen von rohrförmigen Polymerisationsreaktoren in Frage. Der Reaktor (e) kann beispielsweise ein Einzonenreaktor sein, bei dem das gesamte Monomergas, das bereits Initiatoren, Molekularmassenregler und gegebenenfalls Comonomere enthält, am Reaktoreingang eingebracht wird. Vorzugsweise handelt es sich bei dem Rohrreaktor um einen Mehrzonenreaktor mit Kaltgas- und Initiatornachdosierung. Die Polymerisationsvorrichtung kann weitere Einrichtungen enthalten. Vorzugsweise enthält diese zwischen Druckhalteventil (f) und Hochdruckproduktabscheider (i) einen Nachkühler (h). Ist der Reaktor (e) als Rohrreaktor ausgestaltet, so enthält die Vorrichtung vor dem Reaktoreingang einen Vorwärmer (d). Ist der Rohrreaktor ein Mehrzonenreaktor, sind weitere Stellen für die Monomergaszuführung und/oder die Initiatornachdosierung am Reaktor vorhanden. Es können weitere, übliche Einrichtungen vorhanden sein. So können der Hochdruckkreis eine Hochdruckabscheidung (k) und der Niederdruckkreis eine Niederdruckabscheidung (p) zur Abtrennung von wachsartigen oder flüssigen Nebenprodukten aus den Kreisgasen enthalten. Die Verdichter können zwischen den einzelnen Verdichterstufen Zwischendruckflaschen und Zwischenkühler enthalten. Selbstverständlich können alle Einrichtungen auch mehrfach vorhanden sein.

Der Inhibitor kann an einer beliebigen Stelle in den Hochdruckkreis (g), in den Niederdruckkreis (n) und/oder den Vorverdichter (b) zudosiert werden. Die Zudosierung in den Hochdruckkreis, beispielsweise in den Nachkühler, erfordert die Anwendung von hohem Druck, beispielsweise von 200 bis 300 bar, und kann unter Einsatz eines Kompressors erfolgen. Wegen des damit verbundenen hohen apparativen Aufwands ist die Zudosierung in den Hochdruckkreis weniger bevorzugt.

In einer bevorzugten Ausführungsform des erfindungsgemäßen Verfahrens wird der Inhibitor in den Niederdruckkreis zudosiert. Die Zudosierung erfolgt dabei bei niedrigem Druck von vorzugsweise 1 bis 3 bar, besonders bevorzugt bei ca. 1,5 bar. Die Zudosierung kann an einer beliebigen Stelle des Niederdruckkreises erfolgen, beispielsweise im Bereich der Niederdruckkreisgasrückführung. Der Inhibitor kann auch mit dem Frischgas zugeführt werden. Vorteilhaft ist der geringe apparative Aufwand der Zudosierung. Diese kann wegen des niedrigen Drucks beispielsweise direkt aus einer Gasflasche über ein Reduzierventil erfolgen.

In einer weiteren bevorzugten Ausführungsform des erfindungsgemäßen Verfahrens wird der Inhibitor in den Vorverdichter zudosiert. Dies kann auf jeder Stufe des Vorverdichters erfolgen, bevorzugt jedoch bei einem Druck von < 20 bar, beispielsweise auf der Saugseite der dritten Stufe eines sechsstufigen Vorverdichters bei ca. 17 bar. Wegen des herrschenden niedrigen Drucks kann die Zudosierung mit geringem apparativen Aufwand, beispielsweise von einem höheren Druck über ein Reduzierventil, erfolgen.

Es wurde gefunden, daß bereits geringe Inhibitorkonzentrationen ausreichen, um eine Belagbildung durch unerwünschte Polymerisation und/oder eine Verschlechterung der Produktqualität durch Propfung und Stippenbildung zu verhindern. So ist es im allgemeinen ausreichend, den Inhibitor in solchen Mengen zuzudosieren, daß sich nach dem Zudosieren eine Inhibitorkonzentration von maximal 25 ppm, vorzugsweise maximal 10 ppm, besonders bevorzugt von 1 bis 10 ppm einstellt. Sauerstoff als Inhibitor wird vorzugsweise in Konzentrationen eingesetzt, bei denen er nur inhibierend und auch bei höheren Temperaturen, wie sie im Bereich des Vorwärmers herrschen, allein nicht ausreichend initiierend wirkt. Es können dabei Sauerstoff-Konzentrationen von 1 bis 5 ppm ausreichend sein, vorzugsweise liegt die Sauerstoffkonzentration bei 2 - 5 ppm.

Sauerstoff wirkt im allgemeinen bei Temperaturen unterhalb von 170 °C generell inhibierend und erst oberhalb von 170 °C - in entsprechend hoher Konzentration, beispielsweise von 20 bis 100 ppm - initiierend. Je nach Ort der Dosierung wirkt er in den Verdichtern und im Vorwärmer eher als Radikalfänger und damit inhibierend.

Stickstoffmonoxid wirkt bezüglich der Ethylenpolymerisation bis zu hohen Temperaturen von ca. 300 °C inhibierend. Je nach Ort der Dosierung wirkt es im Verdichter, Vorwärmer, Reaktor, Nachkühler und Hochdruckkreis inhibierend.

Die Polymerisationsreaktion wird mit einem radikalisch zerfallenden Initiator, vorzugsweise mit einem Peroxid oder einem Peroxidgemisch, initiiert, wobei die Initiierung bei Gegenwart von Sauerstoff als Inhibitor im wesentlichen ausschließlich durch den Peroxidzerfall erfolgt. Geeignete Peroxidinitiatoren sind beispielsweise Diisopropylbenzolhydroperoxid, Di-tert.-Butylperoxid, Cumolhydroperoxid, Tert.-butylperoxyisononat, Methylisobutylketonperoxid, bevorzugt sind t-Butylperoxypivalat, t-Butylperoxyisononat und Methylisobutyl-ketonperoxid.

Die Polymerisationstemperatur liegt bevorzugt zwischen 150 °C und 350 °C, der bevorzugte Druck zwischen 1500 und 3500 °C. Bevorzugtes ethylenisch ungesättigtes Monomer ist Ethylen. Dieses kann sowohl homopolymerisiert als auch copolymerisiert werden, beispielsweise mit Acrylsäure. Besonders bevorzugt wird Ethylen zu LD-Polyethylen homopolymerisiert. Es können alle üblichen Zusätze, beispielsweise Molekulargewichtsregler, in dem Polymerisationsgemisch vorliegen.

Mit dem erfindungsgemäßen Verfahren kann die Bildung von Belägen, die auf eine unerwünschte, vorzeitige Polymerisation im Bereich der Verdichter zurückzuführen ist, stark verringert werden. Dies wirkt sich positiv auf die Produktqualität aus. Im Bereich des Nachkühlers und Produktabscheiders kann der Propfung der Polymere entgegengewirkt werden. Dies resultiert in einem abgesenkten Stippenpegel und somit höherer Produktqualität.

Die Erfindung wird durch die nachstehenden Beispiele näher erläutert.

### Beispiel 1

### Belagbildung

In einer Anlage zur Hochdruck-Ethylenpolymerisation wurden auf der Saugseite der 3. Stufe des Vorverdichters Sauerstoff bzw. Stickstoffmonoxid als Inhibitor zudosiert, so daß sich eine Inhibitor-Zonzentration von 3 ppm bzw. 2 ppm einstellte. Nach 2, 4, 8 und 12 Wochen wurden die Nachverdichter-Zwischenkühler und Zwischendruckflaschen geöffnet. Auch nach 12 Wochen konnten keine nennenswerten Beläge festgestellt werden.

Zum Vergleich wurde ohne Zusatz eines Inhibitors gearbeitet. Nach 2 Wochen betrug die Dicke der Beläge in der Zwischendruckflasche ca. 0,5 mm, nach 12 Wochen ca. 5 mm.

### Beispiel 2

### Produktqualität

Es wurde mit den in den Tabellen 1 und 2 angegebenen Inhibitorkonzentrationen gearbeitet, wobei die Zudosierung wie unter Beispiel 1 beschrieben erfolgte. Es wurde ein Polyethylen mit den angegebenen Produktspezifikationen erhalten.

**Tabelle 1: NO-Inhibierung**

| Inhibitor-Konzentration [ppm] | Dosiermenge [l/h] | Peroxid-Verbrauch [g/t PE] | melt flow index 2,16/190 [g/10 min] | Dichte [kg/m³] | Ausziehfahigkeit [µm] | Streuwert [%] |
|---|---|---|---|---|---|---|
| 0 | 0 | 312 | 0,83 | 923,7 | 23 | 21 |
| 2 | 15,5 | 326 | 0,89 | 923,6 | 20 | 18 |
| 5 | 38,1 | 315 | 0,88 | 923,6 | 17 | 17 |
| 11 | 85,9 | 340 | 0,90 | 923,8 | 18 | 18 |

**Tabelle 2: O₂-Inhibierung**

| Inhibitor-Konzentration [ppm] | Dosiermenge [l/h] Luft | Peroxid-Verbrauch [g/tPE] | melt flow index 2,16/190 [g/10 min] | Dichte [kg/m³] | Ausziehfähigkeit [µm] | Streuwert [%] |
|---|---|---|---|---|---|---|
| 0 | 0 | 312 | 0,83 | 923,7 | 23 | 21 |
| 3 | 102 | 304 | 0,85 | 923,3 | 19 | 18 |
| 6 | 199 | 296 | 0,89 | 923,5 | 20 | 17 |

Mit den erfindungsgemäß verwendeten Inhibitoren werden Produkte gleichbleibend guter Qualität erhalten, die sich insbesondere durch eine gute Ausziehfähigkeit und geringe Streuwerte auszeichnen.

## Patentansprüche

1. Verfahren zur Polymerisation oder Copolymerisation von ethylenisch ungesättigten Monomeren in Gegenwart von radikalisch zerfallenden Polymerisationsinitiatoren in einer kontinuierlich betriebenen Polymerisationsvorrichtung umfassend eine Frischgaszuführung (a), einen Vorverdichter (b), einen Nachverdichter (c), einen Reaktor (e), ein Druckhalteventil (f), einen Hochdruckkreis (g) mit einem Hochdruckproduktabscheider (i) und einer Hochdruckkreisgasrückführung (L), ein Produktventil (m) und einen Niederdruckkreis (n) mit einem Niederdruckproduktabscheider (o) und einer Niederdruckkreis-gasrückführung (q), **dadurch gekennzeichnet, daß** in den Hochdruckkreis (g), in den Niederdruckkreis (n) und/oder den Vorverdichter (b) Stickstoffmonoxid oder Sauerstoff als Inhibitor zudosiert wird.

2. Verfahren nach Anspruch 1, **dadurch gekennzeichnet, daß** sich nach dem Zudosieren eine Inhibitorkonzentration von maximal 25 ppm einstellt.

3. Verfahren nach Anspruch 1 oder 2, **dadurch gekennzeichnet, daß** als Inhibitor Stickstoffmonoxid zudosiert wird.

4. Verfahren nach Anspruch 1 oder 2, **dadurch gekennzeichnet, daß** als Inhibitor Sauerstoff zudosiert wird und sich nach dem Zudosieren eine Inhibitorkonzentration von 1 bis 10 ppm einstellt.

5. Verfahren nach Anspruch 4, **dadurch gekennzeichnet, daß** sich eine Inhibitorkonzentration von 2 bis 5 ppm einstellt.

6. Verfahren nach einem der Ansprüche 1 bis 5, **dadurch gekennzeichnet, daß** der Inhibitor in den Vorverdichter zudosiert wird.

7. verfahren nach Anspruch 6, **dadurch gekennzeichnet, daß** der Inhibitor bei einem Druck < 20 bar zudosiert wird.

8. Verfahren nach einem der Ansprüche 1 bis 7, **dadurch gekennzeichnet, daß** Ethylen polymerisiert wird.

9. Verwendung von Sauerstoff als Inhibitor in einem Verfahren, wie es in einem der Ansprüche 1 bis 8 definiert ist.

10. Verwendung von Stickstoffmonoxid als Inhibitor in einem Verfahren, wie es in einem der Ansprüche 1 bis 8 definiert ist.

## Claims

1. A method for polymerising or copolymerising ethylenically unsaturated monomers in the presence of polymerisation initiators which decompose to form free radicals in a continuously operated polymerisation apparatus comprising a fresh gas feed line (a), a pre-compressor (b), a post-compressor (c), a reactor (e), a pressure maintaining valve (f), a high-pressure circuit (g) with a high-pressure product separator (i) and a high-pressure circulation gas return line (L), a product valve (m) and a low pressure circuit (n) with a low-pressure product separator (o) and a low-pressure circulation gas return line (q), **characterised in that** nitrogen monoxide or oxygen is introduced as an inhibitor into the high-pressure circuit (g), into the low-pressure circuit (n) and/or the pre-compressor (b).

2. A method according to claim 1, **characterised in that**, after introduction, an inhibitor concentration of at most 25 ppm is established.

3. A method according to claim 1 or claim 2, **characterised in that** nitrogen monoxide is introduced as inhibitor.

4. A method according to claim 1 or claim 2, **characterised in that** oxygen is introduced as inhibitor and, after introduction, an inhibitor concentration of from 1 to 10 ppm is established.

5. A method according to claim 4, **characterised in that** an inhibitor concentration of from 2 to 5 ppm is established.

6. A method according to any one of claims 1 to 5, **characterised in that** the inhibitor is introduced into the pre-compressor.

7. A method according to claim 6, **characterised in that** the inhibitor is introduced at a pressure of < 20 bar.

8. A method according to any one of claims 1 to 7, **characterised in that** ethylene is polymerised.

9. Use of oxygen as an inhibitor in a method as defined in any one of claims 1 to 8.

10. Use of nitrogen monoxide as an inhibitor in a method as defined in any one of claims 1 to 8.

## Revendications

1. Procédé pour la polymérisation ou la copolymérisation de monomères éthyléniquement insaturés en présence d'initiateurs de polymérisation se décomposant par voie radicalaire dans un dispositif de polymérisation exploité en continu, comprenant une alimentation de gaz frais (a), un précompresseur (b), un post-compresseur (c), un réacteur (e), une soupape de maintien de la pression (f), un circuit haute pression (g) avec un séparateur de produits à haute pression (i) et un recyclage des gaz dans le circuit haute pression (L), une soupape pour les produits (m) et un circuit basse pression (n) avec un séparateur de produits à basse pression (o) et un recyclage de gaz dans le circuit basse pression (q), **caractérisé en ce qu'**on ajoute en dosant dans le circuit haute pression (g), dans le circuit basse pression (n) et/ou dans le précompresseur (b) du monoxyde d'azote ou de l'oxygène comme inhibiteur.

2. Procédé selon la revendication 1, **caractérisé en ce qu'**il se règle, après l'ajout en dosant, une concentration en inhibiteur d'au maximum 25 ppm.

3. Procédé selon la revendication 1 ou 2, **caractérisé en ce qu'**on ajoute en dosant, comme inhibiteur, du monoxyde d'azote.

4. Procédé selon la revendication 1 ou 2, **caractérisé en ce qu'**on ajoute en dosant, comme inhibiteur, de l'oxygène et **en ce qu'**il se règle après l'ajout en dosant une concentration en inhibiteur de 1 à 10 ppm.

5. Procédé selon la revendication 4, **caractérisé en ce qu'**il se règle une concentration en inhibiteur de 2 à 5 ppm.

6. Procédé selon l'une quelconque des revendications 1 à 5, **caractérisé en ce que** l'inhibiteur est ajouté en dosant dans le précompresseur.

7. Procédé selon la revendication 6, **caractérisé en ce que** l'inhibiteur est ajouté en dosant à une pression < 20 bars.

8. Procédé selon l'une quelconque des revendications 1 à 7, **caractérisé en ce qu'**on polymérise de l'éthylène.

9. Utilisation d'oxygène comme inhibiteur dans un procédé tel qu'il est défini dans l'une quelconque des revendications 1 à 8.

10. Utilisation de monoxyde d'azote comme inhibiteur dans un procédé tel qu'il est défini dans l'une quelconque des revendications 1 à 8.
